# EUROPÄISCHE PATENTSCHRIFT

(11) **EP 3 764 739 B1**
(45) Veröffentlichungstag und Bekanntmachung des Hinweises auf die Patenterteilung: **28.08.2024**
(21) Anmeldenummer: 20184513.8
(22) Anmeldetag: 07.07.2020
(51) Int. Cl.: H05B 3/74, A47J 43/07

(54) **SPEISENZUBEREITUNGSGERÄT MIT PARALLELGESCHALTETEN ELEKTRISCHEN KALTLEITERN**
FOOD PREPARATION DEVICE WITH PARALLEL ELECTRICAL COLD CONDUCTORS
DISPOSITIF DE PRÉPARATION DES ALIMENTS POURVU DE RÉSISTANCES À COEFFICIENT DE TEMPÉRATURE POSITIVE ÉLECTRIQUES MONTÉES EN PARALLÈLE

(30) Priorität: 11.07.2019 EP 19185781
(43) Veröffentlichungstag der Anmeldung: 13.01.2021
(73) Patentinhaber: Vorwerk & Co. Interholding GmbH, 42270 Wuppertal (DE)
(72) Erfinder: Schmitz, Kevin, 42781 Haan (DE); Tietz, Sebastian, 51379 Leverkusen (DE)
(74) Vertreter: Gille Hrabal Partnerschaftsgesellschaft mbB Patentanwälte

(56) Entgegenhaltungen:
- EP-A2- 0 715 483
- WO-A1-91/02481
- WO-A1-98/19499
- DE-A1- 102008 038 783
- WIKIPEDIA: "Sheet resistance (Wikipedia)", INTERNET CITATION, 1 December 2009 (2009-12-01), pages 1 - 3, XP007910724, Retrieved from the Internet <URL:http://en.wikipedia.org/wiki/Sheet_resistance> [retrieved on 20091201]

## Beschreibung

Die Erfindung betrifft ein Speisenzubereitungsgerät mit einer elektrischen Heizeinrichtung, die zumindest zwei elektrische Kaltleiter für ein Erhitzen einer Speise in einem Speisenzubereitungsraum umfasst, wobei die elektrischen Kaltleiter elektrisch parallelgeschaltet sind.

Speisen werden für ihre Zubereitung regelmäßig erwärmt oder erhitzt. Dies geschieht beispielsweise mithilfe eines Herdes, der über wenigstens eine Heizplatte in Form einer Kochplatte verfügt. Eine Kochplatte ist eine Platte, die durch eine Heizeinrichtung erhitzt werden kann.

Eine Kochplatte kann kreisrund sein. Es kann sich aber auch um eine Platte handeln, die nur bereichsweise erhitzt werden kann. Es kann sich um ein oder mehrere kreisrunde Bereiche handeln, die erhitzt werden können. Durch Erhitzen der Platte oder eines Bereichs der Platte wird Wärme von der Platte zu einem darauf abgestelltem Kochgefäß zugeführt. Eine in dem Kochgefäß befindliche Speise kann dadurch erhitzt werden.

Aus der Druckschrift DE 10 019 126 A1 ist eine Küchenmaschine mit einem Rührgefäß und einem Antrieb für ein Rührwerk in dem Rührgefäß bekannt. An dem Boden des Rührgefäßes gibt es ein elektrisches Widerstandsheizelement mit auf einem Dielektrikum aufgebrachten Leiterbahnen. Durch Aufheizen des Bodens des Rührgefäßes kann eine Speise in dem Rührgefäß erhitzt werden. Das Rührgefäß dient also auch als Kochgefäß.

Es wird angestrebt, einen Boden eines Kochgefäßes gleichmäßig zu erwärmen, um ein lokales Überhitzen einer Speise während ihrer Zubereitung zu vermeiden. Um dies zu erreichen, kann der Boden eines Kochgefäßes gut wärmeleitende Materialien wie Kupfer oder Aluminium umfassen, die als Wärmespreizschichten dienen. Dem Boden zugeführte Wärme soll durch die gut wärmeleitenden Materialien gleichmäßig verteilt werden. Ein Beispiel für ein solches Kochgefäß ist aus der Druckschrift DE 20 2004 007 542 U1 bekannt.

Wird ein Boden eines Kochgefäßes lokal überhitzt, so kann die Heizeinrichtung abgeschaltet werden, bis sich ein thermisches Gleichgewicht eingestellt hat. Ein Kochprozess wird dann entsprechend verzögert.

Durch ein Kochgefäß wird ein Raum für die Zubereitung einer Speise bereitgestellt. Ein solcher Raum wird daher nachfolgend Speisenzubereitungsraum genannt.

Backofen sowie Mikrowelle sind weitere Beispiele für Speisenzubereitungsgeräte. Ein Backofen oder eine Mikrowelle umfassen jeweils einen Raum, in dem Speisen erhitzt werden sollen. Ein solcher Raum ist ein Speisenzubereitungsraum im Sinne der vorliegenden Erfindung. Es wird auch bei solchen Speisenzubereitungsräumen angestrebt, Wärme gleichmäßig den darin befindlichen Speisen zuzuführen.

Speisenzubereitungsgeräte mit Heizeinrichtungen sind aus den Druckschriften DE 10 2008 038 783 A1 und WO 98/19499 A1 bekannt. Eine Heizeinrichtung für einen Verpflegungswagen ist aus der Druckschrift WO 91/02481 A1 bekannt.

Mit der vorliegenden Erfindung wird das Ziel verfolgt, eine Speise in einem Speisenzubereitungsraum mit geringem technischem Aufwand schnell und zuverlässig zubereiten zu können.

Die Aufgabe der Erfindung wird durch den Gegenstand des Anspruchs 1 gelöst. Vorteilhafte Ausgestaltungen ergeben sich aus den abhängigen Ansprüchen. Die Erfindung kann darüber hinaus, wie anhand der eingangs genannten Beispiele beschrieben, ausgestaltet sein.

Das Ziel der vorliegenden Erfindung wird durch ein Speisenzubereitungsgerät erreicht, das mit einer elektrischen Heizeinrichtung versehen ist. Die Heizeinrichtung umfasst zumindest zwei elektrische Leiter für ein Erhitzen einer Speise in einem Speisenzubereitungsraum. Die elektrischen Leiter sind elektrisch parallelgeschaltet. Die elektrischen Leiter sind elektrische Kaltleiter.

Für ein Erhitzen einer Speise fließt ein Strom durch die dafür vorgesehenen elektrischen Kaltleiter. Diese werden durch den elektrischen Strom entsprechend erhitzt. Die Heizeinrichtung kann andere elektrische Leiter umfassen, die im Vergleich zu den genannten elektrischen Kaltleitern zumindest kaum erhitzt werden. Diese anderen elektrischen Leiter sind keine elektrischen Leiter, die für ein Erhitzen einer Speise bestimmt und geeignet sind.

Ein Kaltleiter im Sinne der vorliegenden Erfindung weist einen positiven Temperaturkoeffizienten auf. Dies bedeutet, dass der elektrische Widerstand des Kaltleiters mit zunehmender Temperatur steigt.

Weisen die Kaltleiter unterschiedliche elektrische Widerstände auf, so entstehen unterschiedliche elektrische Teilströme, wenn eine Spannung angelegt wird. Die elektrischen Teilströme verhalten sich umgekehrt zu den jeweiligen Widerständen. In einem Kaltleiter mit einem hochohmigen Widerstand kann ein relativ kleiner elektrischer Strom fließen. In einem Kaltleiter mit einem niederohmigen Widerstand kann ein relativ hoher elektrischer Strom fließen.

Ein lokales Überhitzen hat zur Folge, dass der elektrische Widerstand des von der lokalen Überhitzung betroffenen Kaltleiters ansteigt. Ist der dazu parallelgeschaltete elektrische Kaltleiter von der lokalen Überhitzung nicht betroffen, so verringert sich der Strom in dem elektrischen Kaltleiter, der von der lokalen Überhitzung betroffen ist. In dem anderen Kaltleiter erhöht sich die Stromstärke. Es kann so einer lokalen Überhitzung entgegengewirkt werden.

In einer Ausgestaltung sind zwei für ein Erhitzen einer Speise vorgesehene elektrische Kaltleiter durch ein oder mehrere elektrische Brücken miteinander elektrisch verbunden. Eine Brücke ist also ein elektrischer Leiter. Durch Brücken gelingt eine Unterteilung in Segmente. Wird eines der Segmente lokal überhitzt, so reduziert sich der Stromfluss nur im Bereich des Segmentes und nicht entlang der gesamten Länge eines von der lokalen Überhitzung betroffenen Kaltleitleiters, durch den eine Speise auf eine gewünschte Temperatur erhitzt werden kann.

Eine jede elektrische Brücke verbindet erfindungsgemäß nicht mehr als zwei elektrische Kaltleiter miteinander elektrisch. Eine zu erhitzende Fläche kann mithilfe dieser Ausgestaltung in besonders viele kleine Segmente geeignet unterteilt werden. Es kann ein reduzierter Stromfluss aufgrund einer lokalen Überhitzung auf ein entsprechend kleines Segment beschränkt werden. Ungleichmäßige Temperaturverteilungen werden so weiter verbessert vermieden.

Vorzugsweise ist ein für ein Erhitzen vorgesehener elektrischer Kaltleiter mit einer Mehrzahl von Brücken elektrisch verbunden. Es stehen damit für elektrischen Strom eine Mehrzahl von Ausweichmöglichkeiten zur Verfügung, falls ein Segment der Fläche, die durch Kaltleiter erhitzt werden kann, lokal überhitzt wird. Weiter verbessert wird dadurch erreicht, dass einer lokalen Erhitzung automatisiert entgegengewirkt wird.

Vorzugsweise weisen die Mehrzahl von Brücken, die mit einem für ein Erhitzen einer Speise vorgesehenen elektrischen Kaltleiter verbunden sind, untereinander gleiche Abstände auf. Dadurch wird weiter verbessert ein gleichmäßiges Erhitzen erreicht. Vorzugsweise wird von den genannten gleichen Abständen nur dann abgewichen, wenn Platzbedarf aus anderen Gründen besteht, so zum Beispiel zur Unterbringung eines Temperatursensors oder aber zur Unterbringung von elektrischen Kontakten für eine Stromzufuhr.

Die für ein Erhitzen einer Speise vorgesehenen elektrischen Kaltleiter verlaufen vorzugsweise entlang von Kreisbahnen. Kochgefäße weisen regelmäßig einen kreisförmigen Boden auf. Es ist daher vorteilhaft, dass auch die für ein Erhitzen einer Speise vorgesehenen elektrischen Kaltleiter entlang von Kreisbahnen verlaufen, um ein entsprechendes Gefäß geeignet gleichmäßig erhitzen zu können.

Der Querschnitt der für ein Erhitzen einer Speise vorgesehenen elektrischen Kaltleiter nimmt vorzugsweise mit kleiner werdendem Radius einer Kreisbahn zu. So kann die Breite einer aus einem Kaltleitermaterial bestehenden Bahn zunehmen, je kleiner der Radius der Kreisbahn ist. Durch diese Ausgestaltung gelingt weiter verbessert eine gleichmäßige Wärmezufuhr für ein Erhitzen einer Speise.

In einer Ausgestaltung werden die für ein Erhitzen vorgesehenen elektrischen Kaltleiter von einem elektrischen Leiter außen umlaufen. Über diesen umlaufenden Leiter soll elektrischer Strom geeignet gleichmäßig zu ein oder mehreren elektrischen Kaltleitern fließen, die für ein Erhitzen vorgesehen sind. Es kann sich bei diesem umlaufenden elektrischen Leiter um einen ringförmig geschlossenen Leiter handeln. Es genügt aber auch, dass die für ein Erhitzen vorgesehenen elektrischen Kaltleiter lediglich überwiegend durch den außen umlaufenden elektrischen Leiter umschlossen werden. Der außen umlaufende elektrische Leiter kann also beispielsweise lediglich einen Dreiviertelkreis bilden. Es kann ein offener Bereich verbleiben, sodass der außen umlaufende elektrische Leiter nicht ringförmig geschlossen ist.

Der außen umlaufende elektrische Leiter besteht aus einem Material mit einem elektrischen spezifischen Widerstand, der wenigstens 10 mal, bevorzugt wenigstens 100 mal, kleiner ist als der elektrische spezifische Widerstand des Materials, aus dem die für ein Erhitzen vorgesehenen elektrischen Kaltleiter bestehen. Auch diese Maßnahme dient dazu, eine gleichmäßige Stromversorgung für die elektrischen Kaltleiter, die für ein Erhitzen vorgesehen sind, sicherzustellen.

Es sind Brücken vorhanden, die den außen umlaufenden elektrischen Leiter mit für ein Erhitzen vorgesehenen elektrischen Kaltleitern elektrisch verbinden. Durch den außen umlaufenden elektrischen Leiter mit den Brücken gelingt eine geeignet gleichmäßige Stromzufuhr zu den elektrischen Kaltleitern, die für ein Erhitzen einer Speise vorgesehen sind. Die Mehrzahl der Brücken trägt wiederum dazu bei, dass geeignet in Segmente auch im Randbereich einer zu erhitzenden Fläche unterteilt werden kann.

Vorzugsweise weisen die Brücken, die von dem außen umlaufenden elektrischen Leiter zu ein oder mehreren, für ein Erhitzen einer Speise vorgesehenen elektrischen Kaltleitern führen, untereinander gleiche Abstände auf. Weiter verbessert wird dadurch eine gleichmäßige Stromversorgung für elektrische Kaltleiter, die für ein Erhitzen vorgesehen sind, erreicht.

Da der außen umlaufende elektrische Leiter der Stromversorgung dient, ist dieser so eingerichtet, dass dieser an eine elektrische Spannungsquelle angeschlossen werden kann.

Vorzugsweise werden für ein Erhitzen vorgesehene ein oder mehrere elektrische Kaltleiter von einem elektrischen Leiter innen umlaufen. Der innen umlaufende elektrische Leiter dient einer Stromversorgung für die elektrischen Kaltleiter, die für ein Erhitzen vorgesehen sind. Der innen umlaufende elektrische Leiter kann ein geschlossener Leiter sein. Der innen umlaufende elektrische Leiter kann also eine Ringform aufweisen. Der innen umlaufende elektrische Leiter muss aber nicht zu 100 % innen umlaufend sein. Es muss sich also nicht um eine geschlossene Ringform handeln. Es genügt also beispielsweise ein Dreiviertelkreis. Der innen umlaufende elektrische Leiter sollte aber überwiegend umlaufen, also über einen Halbkreis hinausgehen, um gleichmäßig mit Strom versorgen zu können. Der innen umlaufende elektrische Leiter besteht aus einem Material mit einem elektrischen spezifischen Widerstand, der wenigstens 10 mal, bevorzugt wenigstens 100 mal, kleiner ist als der elektrische spezifische Widerstand des Materials, aus dem die für ein Erhitzen vorgesehenen elektrischen Kaltleiter bestehen. Diese Maßnahme dient dazu, die für ein Erhitzen vorgesehenen elektrischen Kaltleiter gleichmäßig mit elektrischem Strom versorgen zu können. Es sind Brücken vorgesehen, die den innen umlaufenden elektrischen Leiter mit ein oder mehreren elektrischen Kaltleitern elektrisch verbinden, die für ein Erhitzen vorgesehenen sind. Diese Maßnahme trägt ebenfalls dazu bei, elektrische Kaltleiter gleichmäßig mit Strom versorgen zu können, die für ein Erhitzen vorgesehen sind.

Elektrischen Brücken bestehen vorzugsweise aus einem Material mit einem elektrischen spezifischen Widerstand, der wenigstens 10mal, bevorzugt wenigstens 100mal, kleiner ist als der elektrische spezifische Widerstand, aus dem die für ein Erhitzen einer Speise vorgesehenen Kaltleiter bestehen. Ein unerwünschtes lokales Überhitzen durch eine Brücke wird so vermieden. Vorzugsweise sind daher sämtliche elektrischen Brücken, die zwei für ein Erhitzen einer Speise vorgesehenen elektrischen Kaltleiter miteinander verbinden, so beschaffen. Vorzugsweise sind sämtliche elektrischen Brücken so beschaffen, die einen für eine Stromversorgung umlaufenden elektrischen Leiter mit zumindest einem elektrischen Kaltleiter verbinden, der für ein Erhitzen vorgesehen ist. Auch dies dient dazu, ein lokales Überhitzen durch eine Brücke zu vermeiden.

Brücken und/oder nicht für ein Erhitzen vorgesehene elektrische Leiter bestehen bevorzugt aus Silber. Silber ist einerseits ein sehr guter elektrischer Leiter. Silber ist andererseits korrosionsbeständig und damit für einen Einsatz unter den Bedingungen gut geeignet, die bei einem Speisenzubereitungsgerät auftreten können. Vorzugsweise bestehen daher sämtliche Brücken und/oder die genannten nicht für ein Erhitzen vorgesehenen elektrischen Leiter aus Silber.

Das Speisenzubereitungsgefäß umfasst wenigstens vierzig, bevorzugt wenigstens fünfzig, elektrisch parallelgeschaltete Kaltleiter, die für ein Erhitzen einer Speise vorgesehen sind. Durch eine große Vielzahl solcher Kaltleiter gelingt eine Unterteilung in sehr kleine Segmente. Sehr gezielt kann daher einer lokalen Überhitzung automatisiert entgegengewirkt werden.

In einer Ausgestaltung ist ein temperaturabhängiger Schalter, insbesondere ein Bimetallschalter, vorhanden. Der temperaturabhängige Schalter schaltet in Abhängigkeit von einer Temperatur. Der temperaturabhängige Schalter ist im vorliegenden Fall so eingerichtet, dass bei Überschreiten eines Temperatur - Schwellwertes eine Stromzufuhr zu den für ein Erhitzen vorgesehenen Kaltleitern unterbrochen wird. Ein generelles Überhitzen kann durch den temperaturabhängigen Schalter zuverlässig vermieden werden.

Der temperaturabhängige Schalter ist vorzugsweise so angeordnet, dass dieser durch die Temperatur von zwei verschiedenen elektrisch parallelgeschalteten Kaltleitern geschaltet werden kann, wobei die beiden Kaltleiter für ein Erhitzen vorgesehen sind. Es genügt dann, dass einer von zwei elektrisch parallelgeschalteten Kaltleitern zu heiß wird, damit die Stromzufuhr durch den temperaturabhängigen Schalter unterbrochen wird. Dies erhöht die Sicherheit, da es bei dieser Ausführungsform unschädlich ist, wenn einer von den beiden elektrischen Kaltleitern, die für ein Erhitzen einer Speise vorgesehen sind, beschädigt worden ist.

Vorzugsweise ist ein Temperatursensor des Speisenzubereitungsgerätes so angeordnet, dass dieser durch zwei verschiedene elektrisch parallelgeschaltete, für ein Erhitzen vorgesehene Kaltleitern, erhitzt werden kann. Ist einer der beiden elektrischen Kaltleiter beschädigt, so kann nach wie vor eine Temperatur geeignet gemessen werden. Diese Maßnahme dient also ebenfalls der Sicherheit und der Langlebigkeit des Speisenzubereitungsgerätes.

Die für ein Erhitzen einer Speise vorgesehenen elektrischen Kaltleiter bestehen vorzugsweise aus einer Heizleiterlegierung mit einem elektrischen spezifischen Widerstand von wenigstens 0,3 Ω·mm²/m, vorzugsweise von wenigstens 1 Ω·mm²/m. Mit hohem Wirkungsgrad kann so elektrischer Strom in Wärme umgewandelt werden.

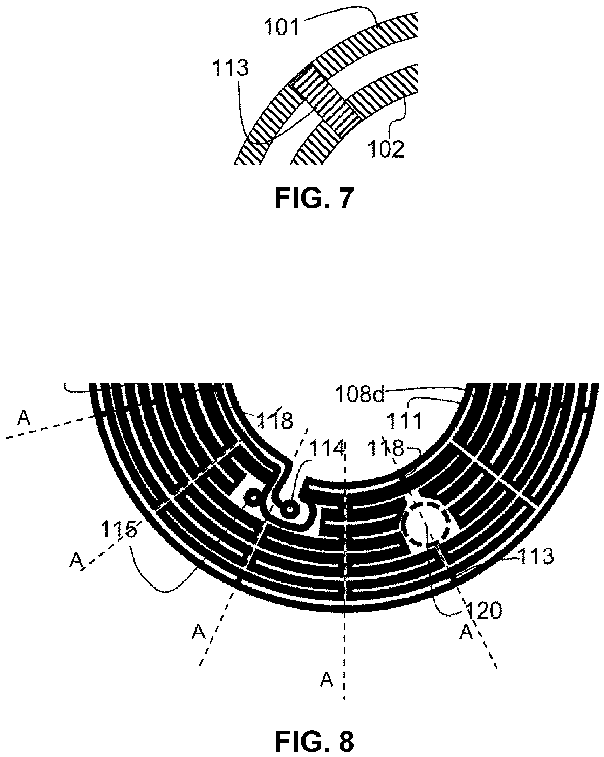

Eine Brücke überlappt mit einem für ein Erhitzen vorgesehenen Kaltleiter bevorzugt, um diesen elektrisch zu kontaktieren. Dies wird in der Figur 7 gezeigt. Eine Brücke grenzt dann nicht lediglich an den Kaltleiter seitlich an, sondern befindet sich im Überlappungsbereich oberhalb oder unterhalb des Kaltleiters. Das Material, aus dem die Brücke besteht, unterscheidet sich grundsätzlich vom Material, aus dem der Kaltleiter besteht. Im Überlappungsbereich gibt es dann also zwei Schichten, die übereinander angeordnet sind. Dies trägt zur Langlebigkeit bei.

Ist die zu beheizende Fläche rund, so lässt sich die zu beheizende Fläche kuchenstückartig unterteilen. Der elektrische Gesamtwiderstand der elektrischen Kaltleiter, die für ein Erhitzen vorgesehen sind und die sich innerhalb einer solchen kuchstückartigen Unterteilung befinden, ist vorzugsweise gleich groß oder zumindest im Wesentlichen gleich groß wie der elektrische Gesamtwiderstand der für ein Erhitzen vorgesehenen Kaltleiter, die sich innerhalb einer benachbarten kuchstückartigen Unterteilung befinden, wenn die kuchstückartigen Unterteilungen gleich groß sind. Ein gleichmäßiges Heizergebnis kann dadurch erzielt werden.

Ist die zu beheizende Fläche rechteckförmig, so kann diese rechteckförmige Fläche rechteckförmig unterteilt werden. Der elektrische Gesamtwiderstand der für ein Erhitzen vorgesehenen Kaltleiter in einer ersten rechteckförmigen Unterteilung ist vorzugsweise gleich groß oder zumindest im Wesentlichen gleich groß wie der elektrische Gesamtwiderstand der für ein Erhitzen vorgesehenen Kaltleiter, die sich innerhalb einer benachbarten rechteckförmigen, gleich großen Unterteilung befinden. Ein gleichmäßige Heizergebnis kann dadurch erzielt werden.

Zusätzlich zur Parallelschaltung von elektrischen Kaltleitern gibt es in einer Ausgestaltung der Erfindung ein oder mehrere elektrische Brücken. Eine jede elektrische Brücke ist ein elektrischer Leiter, der einen Kaltleiter elektrisch mit zumindest einem dazu parallelgeschalteten elektrischen Kaltleiter verbindet. Dies hat zur Folge, dass sich ein Teilstrom, der durch einen Kaltleiter fließt, verändern kann. Da dies zumindest auch in Abhängigkeit von der Temperatur geschieht, können überhitzte lokale Bereiche vermieden werden, ohne dafür eine separate Steuerung vorsehen zu müssen. Umgekehrt werden lokal kühle Bereiche zwangsläufig stärker erhitzt. Es lassen sich daher schnell und zuverlässig gute Kochergebnisse erzielen.

Die elektrisch parallelgeschalteten Kaltleiter sind in einer Ausgestaltung in einer Platte angeordnet. Diese sind dann in die Platte integriert. Die elektrisch parallelgeschalteten Kaltleiter können alternativ unterhalb einer Platte angebracht sein. Die Platte kann ein Boden oder eine Wand eines Speisenzubereitungsraums sein. Alternativ kann die Platte Teil einer Kochplatte sein, auf der ein Gefäß für die Zubereitung einer Speise abgestellt werden kann. Durch diese Ausgestaltung wird sichergestellt, dass die Kaltleiter an den Bereich angrenzen, in dem eine Speise für eine Zubereitung vorhanden sein kann. Kochergebnisse können weiter verbessert werden.

Vorteilhaft ist der Temperaturkoeffizient einer elektrischen Brücke in einer Ausgestaltung der Erfindung kleiner als der Temperaturkoeffizient der parallelgeschalteten elektrischen Kaltleiter. Der Temperaturkoeffizient einer elektrischen Brücke kann kleiner oder gleich Null sein. Ist ein Temperaturkoeffizient kleiner als Null, so verringert sich der elektrische Widerstand mit zunehmender Temperatur. Ist ein Temperaturkoeffizient gleich Null, verändert sich der elektrische Widerstand nicht in Abhängigkeit von der Temperatur. Es wird dadurch weiter verbessert erreicht, dass sich Teilströme günstig auf die elektrischen Kaltleiter verteilen, um Temperaturungleichgewichte bei einer Speise während ihrer Zubereitung zu vermeiden. Kochergebnisse können entsprechend schnell und zuverlässig verbessert werden.

Der elektrische Widerstand einer elektrischen Brücke ist bei gleicher Temperatur vorteilhaft kleiner als der elektrische Widerstand eines Abschnitts eines elektrischen Kaltleiters zwischen der elektrischen Brücke und einer benachbarten elektrischen Brücke. Es wird dadurch weiter verbessert erreicht, dass sich Teilströme günstig auf die elektrischen Kaltleiter verteilen, um gute Kochergebnisse schnell und zuverlässig zu erhalten.

In einer Ausgestaltung umfasst die elektrische Heizeinrichtung wenigstens drei oder vier parallelgeschaltete elektrische Kaltleiter. Es können aber auch mehr als vier parallelgeschaltete elektrische Kaltleiter vorhanden sein, so zum Beispiel wenigstens zehn oder wenigstens zwanzig parallelgeschaltete elektrische Kaltleiter. Ein jeder elektrische Kaltleiter ist dann mit wenigstens einem weiteren elektrischen Kaltleiter auch über eine elektrische Brücke elektrisch verbunden. Vorzugsweise verbindet eine jede elektrische Brücke sämtliche parallelgeschalteten elektrischen Kaltleiter.

Die parallelgeschalteten elektrischen Kaltleiter sind vorzugsweise Widerstandsheizleiter für ein Erhitzen einer Speise. Durch die Kaltleiter wird also dann hinreichend Wärme erzeugt, die für ein Erhitzen einer Speise eingesetzt werden kann und soll. Abschnitte eines jeden elektrischen Kaltleiters können aber auch beispielsweise alternativ oder ergänzend ein anderes elektrisches Heizelement umfassen, um durch das andere elektrische Heizelement alternativ oder ergänzend Wärme zu erzeugen. Das andere elektrische Heizelement wird dann über den Kaltleiter mit elektrischem Strom versorgt. Ein solcher Abschnitt wird durch zumindest eine Brücke begrenzt, die diesen elektrischen Kaltleiter mit einem weiteren, dazu parallelgeschalteten elektrischen Kaltleiter verbindet.

Die parallelgeschalteten elektrischen Kaltleiter verlaufen in einer Ausgestaltung vollständig oder überwiegend räumlich parallel zueinander. Dadurch kann weiter verbessert ein gutes Kochergebnis schnell und zuverlässig erzielt werden.

Die elektrischen Widerstände der parallelgeschalteten elektrischen Kaltleiter sind bei gleicher Temperatur, beispielsweise bei Raumtemperatur, gleich groß. Hierdurch kann erreicht werden, dass pro Längeneinheit ein jeder elektrischer Kaltleiter eine gleiche Wärmeleistung erzeugen kann. Dies gilt vor allem dann, wenn die Kaltleiter ansonsten gleich sind, also aus dem gleichen Material bestehen und gleiche Querschnitte aufweisen. Dadurch kann weiter verbessert ein gutes Kochergebnis schnell und zuverlässig erzielt werden.

Die parallelgeschalteten elektrischen Kaltleiter können gleich lang sein, um weiter verbessert ein gutes Kochergebnis schnell und zuverlässig erzielen zu können.

Es kann eine Mehrzahl von elektrischen Brücken vorhanden sein, die untereinander gleiche Abstände aufweisen. Dadurch kann ein Kochergebnis weiter verbessert werden.

Die parallelgeschalteten elektrischen Kaltleiter können überwiegend entlang einer Kreisbahn verlaufen. Diese Ausgestaltung ist zur Lösung der Aufgabe der Erfindung von Vorteil, wenn ein kreisrunder Boden eines Speisenzubereitungsgefäßes erhitzt werden soll.

Parallelgeschaltete elektrische Kaltleiter können unterschiedlich lange Schlaufen umfassen und darüber hinaus zum Beispiel räumlich parallel zueinander in einer anderen Form verlaufen. Dies kann so geschehen, dass Hitze möglichst gleichmäßig verteilt erzeugt werden kann. Dadurch kann ein Kochergebnis weiter verbessert werden.

Abstände zwischen parallelgeschalteten, benachbarten elektrischen Kaltleitern können gleich groß sein. Insbesondere bei dieser Ausführungsform ist es von Vorteil, beispielsweise mithilfe von Schlaufen zu erreichen, dass ein jeder Kaltleiter die gleiche Wärme pro Längeneinheit erzeugen kann, um Wärme geeignet verteilt erzeugen zu können. Ein Kochergebnis kann so weiter verbessert werden. Im Bereich der Schlaufen können die Kaltleiter dann unterschiedliche Abstände zueinander aufweisen.

Abstände zwischen parallelgeschalteten, zumindest überwiegend kreisförmig verlaufenden, benachbarten elektrischen Kaltleitern können von innen nach außen abnehmen. Dies kann so geschehen, dass Hitze möglichst gleichmäßig verteilt erzeugt werden kann. Ein Kochergebnis kann so weiter verbessert werden.

Querschnitte der Kaltleiter können sich unterscheiden, um so die Größe der elektrischen Teilströme zu steuern, der durch die Kaltleiter fließt. Dies kann dazu genutzt werden, um gleichmäßig verteilt Wärme erzeugen zu können. So kann der Querschnitt von Kaltleitern von innen nach außen zunehmen, wenn Kaltleiter entlang einer Kreisbahn verlaufen. Ein Kochergebnis kann so weiter verbessert werden.

Das Speisenzubereitungsgerät kann eine Küchenmaschine sein, die einen Topf für ein Zubereiten einer Speise in dem Topf umfasst. Die Küchenmaschine kann ein Mixwerkzeug für ein Mischen einer Speise und/oder eine Waage für ein Ermitteln eines Gewichts einer Speise umfassen.

Das Speisenzubereitungsgerät kann aber auch ein Herd, ein Backofen oder eine Mikrowelle sein.

Der Boden eines Kochgefäßes kann die elektrisch parallelgeschalteten Kaltleiter umfassen. Eine Küchenmaschine kann das Kochgefäß umfassen. Das Kochgefäß kann zugleich der Behälter sein, in dem Zutaten für Speisen gemischt und/oder zerkleinert und/oder gewogen werden können.

Das erfindungsgemäße Prinzip kann auch auf induktiv wirkende Heizelemente oder Mikrowellengeneratoren angewendet werden. So kann eine Mehrzahl von Spulen vorgesehen sein, um induktiv ein Gefäß oder die Speise unmittelbar mit Mikrowellen zu erhitzen.

Durch die Erfindung kann ein Anbrennen von Lebensmitteln durch automatische Umverteilung von elektrischem Strom vermieden werden. Durch die Erfindung wird gezielt Wärme an kalten Stellen erzeugt, wodurch Hotspots inhärent vermieden werden.

Die Erfindung kann beispielsweise eine gleichmäßige Temperaturverteilung auf einer Heizplatte ermöglichen. Auf diese Weise kann das Anbrennen von Speisen vermieden werden und die Aufheizdauer durch einen gleichmäßigeren Wärmeeintrag ins Gargut, also in die Speise, reduziert werden. Dies ist ohne zusätzliche elektrische Anschlüsse, Regelung oder gar Schalter möglich und völlig selbstregulierend. Es sind dafür keine zusätzlichen Bauteile erforderlich, was den Bauraum sowie den Herstellungsaufwand geringhält.

Der zentrale Unterschied zu bestehenden Systemen mit Wärmespreizschichten ist, dass erfindungsgemäß die Umverteilung vor der Umwandlung von elektrischer in thermische Energie erfolgt. Hierdurch kann das dynamische Ansprechverhalten erheblich verbessert werden. Es entsteht kein zusätzlicher technischer Aufwand für besonders gut wärmeleitende Materialien. Es kann im Vergleich zu bewährten anderen Lösungen der Einsatz von Palladium vorteilhaft reduziert werden, denn das Reduzieren von dem Legierungsbestandteil Palladium im Heizleiter begünstigt für das vorgeschlagene System sogar die elektrische Umverteilung. Sind die parallelgeschalteten elektrischen Kaltleiter in einen Topf einer Küchenmaschine integriert, so wird die Ergonomie des Topfes nicht durch ein zu großes Gewicht negativ beeinflusst.

Die Erfindung nutzt den PTC-Effekt eines stromdurchflossenen Heizleiters, also den zunehmenden elektrischen Widerstand mit zunehmender Temperatur, um gezielt elektrischen Strom geeignet umzuverteilen. Die parallelgeschalteten elektrischen Kaltleiter können in konzentrische Ringe in Form von Leiterbahnen aufgeteilt sein und können dann dazu dienen, eine Heizplatte gleichmäßig aufzuheizen.

Wenn sich keine Wärmeblockaden (beispielsweise aufgrund von angebrannten Gargütern) auf der Heizplatte befinden, teilt sich der elektrische Strom gemäß der Widerstände der konzentrischen Leiterbahnen, also der elektrischen Kaltleiter, auf. Hierzu können die elektrischen Kaltleiter geometrisch (Querschnitt und Länge) so ausgelegt sein, dass eine definierte Wärmestromdichte (Leistung pro Fläche) über dem Radius der Heizplatte eingestellt wird (z. B. konstante Wärmestromdichte). In den Strom durchflossenen elektrischen Kaltleitern kann Wärme entstehen, die zu einem Anstieg der Temperatur einer Heizplatte führen kann.

Befinden sich nun eine oder mehrere Wärmeblockaden auf der Heizplatte, die lokale Temperaturspitzen zur Folge haben, steigt der Widerstand im entsprechenden Abschnitt eines elektrischen Kaltleiters im entsprechenden Bereich der Heizplatte an. Dies führt aufgrund des PTC-Effekts zu einem Anstieg des elektrischen Widerstands, was zu einer automatischen Umleitung des Stroms zu kälteren Stellen führt. Hierzu sind die konzentrischen Leiterbahnen, d. h. die elektrischen Kaltleiter, an mehreren Stellen über den Umfang durch elektrisch gut leitende Brücken miteinander verbunden. Über diese weicht der Strom, der den Weg des geringsten Widerstandes nimmt, aus und verteilt sich auf andere, nicht blockierte Leiterbahnen, also elektrische Kaltleiter. Dort ist aufgrund der geringeren Temperatur der elektrische Widerstand kleiner. Der umverteilte Strom erzeugt an den kälteren Bereichen neben der Wärmeblockade eine Erwärmung. Die heißeren Stellen können dagegen abkühlen. Es erfolgt somit ein Temperaturausgleich.

Neben der Anzahl, Anordnung, Geometrie und dem Material der Leiterbahnen, also der elektrischen Kaltleiter, und ihrem Abstand zueinander können selbige Parameter der Brücken mit dem Ziel variiert werden, eine gleichmäßige Temperaturverteilung in allen Betriebspunkten zu erreichen, um gute Kochergebnisse schnell und zuverlässig zu erzielen.

Durch die Erfindung wird ein selbstregulierendes System geschaffen, das Wärme vorrangig an kalten Stellen erzeugt. Für den Betrieb des selbstregulierenden Systems werden nur zwei elektrische Kontakte benötigt. Das selbstregulierende System kann in einem Dickschichtverfahren hergestellt werden kann. Der primäre Effekt besteht nicht darin, dass Wärme erst umgeleitet werden muss, sondern dass die Position der Wärmeerzeugung angepasst wird. Eine aktive Regelung wird nicht benötigt. Es sind keine Schaltelemente oder Aktuatoren an der Regulierung beteiligt. Eine einfache Umsetzung ohne zusätzlichen Materialeinsatz, zum Beispiel Kupfer, ist möglich. Im Vergleich zu Systemen mit hoher Wärmekapazität ist die Dynamik höher. Auf ungünstige Materialien wie Palladium, durch die ein PTC Effekt vermieden werden soll kann verzichtet werden und zwar zumindest in Bezug auf die Kaltleiter. Vor allem diese umfassen also vorzugsweise kein Palladium.

Das Speisenzubereitungsgerät ist insbesondere eine Küchenmaschine, die ein Rührwerkzeug umfasst. Das Rührwerkzeug wird beispielsweise durch einen Elektromotor angetrieben. Die Welle für das Rührwerkzeug wird während des Betriebs vorzugsweise von Kaltleitern umgeben, die für ein Erhitzen vorgesehen sind.

Nachfolgend werden Ausführungsbeispiele der Erfindung näher erläutert.

Es zeigen
- Figur 1:: Heizplatte einer ersten, nicht erfindungsgemäßen, Ausführungsform;
- Figur 2:: Heizplatte einer zweiten, nicht erfindungsgemäßen, Ausführungsform;
- Figur 3: Heizplatte einer dritten, nicht erfindungsgemäßen, Ausführungsform;
- Figur 4:: Heizplatte einer vierten, nicht erfindungsgemäßen, Ausführungsform;
- Figur 5:: Heizeinrichtung einer fünften Ausführungsform;
- Figur 6:: Heizeinrichtung der fünften Ausführungsform mit Bimetallschalter;
- Figur 7:: Ausschnitt mit zwei Kaltleitern und einer Brücke;
- Figur 8:: Ausschnitt aus Figur 5.

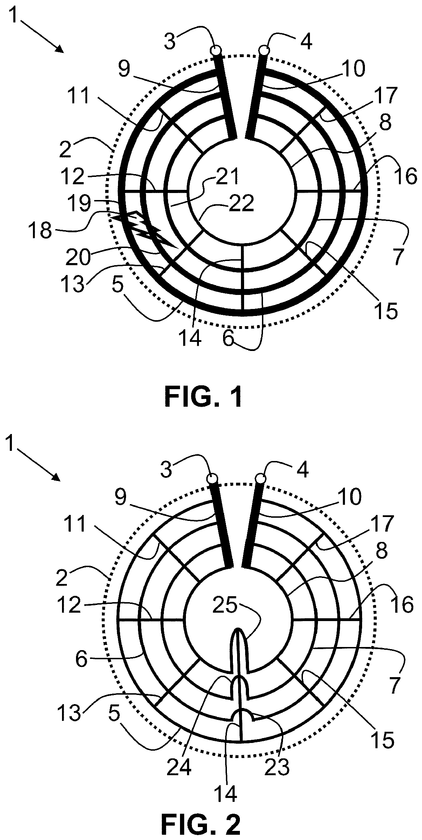

Die Figur 1 zeigt eine Heizplatte 1 eines Speisenzubereitungsgeräts. Das Speisenzubereitungsgerät kann ein Herd oder eine Küchenmaschine sein. Die Heizplatte kann eine Kochplatte oder der Boden eines Gefäßes bzw. Topfes sein, in dem eine Speise zubereitet werden kann. Die Heizplatte 1 umfasst eine Platte 2, die wie in der Figur 1 gezeigt kreisrund sein kann. Die Platte 2 kann aber beispielsweise auch rechteckig sein. Die Platte 2 kann beispielsweise ganz oder überwiegend aus einer Keramik, aus Glas und/oder aus Metall bestehen. Die Heizplatte 1 umfasst eine elektrische Heizeinrichtung mit zwei elektrischen Anschlüssen 3 und 4. An den einen elektrischen Anschluss 3 kann beispielsweise der Pluspol einer elektrischen Gleichstromquelle angeschlossen werden oder sein. An den anderen elektrischen Anschluss 4 kann dann der Minuspol der elektrischen Gleichstromquelle angeschlossen werden oder sein. Die elektrischen Anschlüsse 3, 4 bestehen in der Regel aus Metall, so zum Beispiel vollständig oder überwiegend aus Kupfer, Aluminium oder Stahl. Die elektrische Heizeinrichtung umfasst eine Mehrzahl von Kaltleitern 5, 6, 7 und 8, also beispielweise aus Metall bestehende elektrische Leiter mit einem positiven Temperaturkoeffizienten. Die Kaltleiter 5, 6, 7, 8 können beispielsweise vollständig oder überwiegend aus Kupfer, Aluminium und/oder Eisen bestehen. Fließt durch die Kaltleiter 5 bis 8 ein elektrischer Strom, so werden die Kaltleiter 5 bis 8 dadurch erhitzt. Die so erzeugte Wärme kann einer Speise für eine Zubereitung zugeführt werden.

In der Figur 1 (nicht erfindungsgemäß) werden vier elektrische Kaltleiter 5 bis 8 gezeigt. Es können aber auch mehr als vier elektrische Kaltleiter oder weniger als vier elektrische Kaltleiter vorgesehen sein.

Die Kaltleiter 5, 6, 7, 8 sind elektrisch parallelgeschaltet. Die ersten Enden der Kaltleiter 5, 6, 7, 8 sind daher durch einen ersten elektrischen Verbindungsleiter 9 elektrisch miteinander verbunden, und die zweiten Enden der Kaltleiter 5, 6, 7, 8 sind durch einen zweiten elektrischen Verbindungsleiter 10 elektrisch miteinander verbunden. Der erste elektrische Verbindungsleiter 9 ist mit dem einen elektrischen Anschluss 3 elektrisch verbunden. Der zweite elektrische Verbindungsleiter 10 ist mit dem anderen elektrischen Anschluss 4 elektrisch verbunden.

Die elektrisch parallelgeschalteten Kaltleiter 5 bis 8 sind durch elektrische Brücken 11 bis 17 elektrisch miteinander verbunden. Die elektrischen Brücken 11 bis 17 können ebenfalls vollständig oder überwiegend aus einem Metall wie Kupfer, Aluminium oder Eisen bestehen.

Ist die Heizplatte 1 an eine Stromquelle angeschlossen und fließt ein elektrischer Strom durch die Kaltleiter 5 bis 8, so wird dadurch die Heizplatte 1 erhitzt. Die parallelgeschalteten elektrischen Kaltleiter 5 bis 8 sind also Widerstandsheizleiter für ein Erhitzen einer Speise. Durch das Erhitzen steigt der elektrische Widerstand der Kaltleiter 5 bis 8. Gibt es nun einen Bereich 18, der sich stärker erhitzt als daran angrenzende erhitzte Bereiche, so werden die davon betroffen Abschnitte der Kaltleiter stärker erhitzt. Im Fall der Figur 1 handelt sich um Abschnitte 19, 20 der beiden außen liegenden Kaltleiter 5 und 6, die zwischen den elektrischen Brücken 12 und 13 liegen. Daher erhöht sich temperaturbedingt in diesen Abschnitten 19 und 20 der elektrische Widerstand stärker im Vergleich zu dem elektrischen Widerstand bei den benachbarten Abschnitten 21 und 22. Hierdurch wird bewirkt, dass elektrischer Strom beispielsweise vom elektrischen Anschluss 3 kommend über die Brücke 12 zu den Abschnitten 21 und 22 fließen wird. Nach Passieren der Abschnitte 21 und 22 wird elektrischer Strom durch die Brücke 13 zurück zu den beiden Kaltleitern 5 und 6 fließen. Es wird so also die Heizleistung in dem Bereich 18 abgesenkt, der sich übermäßig stark erhitzt hat. Zwar werden dann die Abschnitte 21 und 22 mehr Wärme als vorgesehen produzieren. Insgesamt ergibt sich aber eine günstigere Verteilung der durch die Kaltleiter 5 bis 8 erzeugten Wärme.

Ein lokal stärker erhitzter Bereich 18 kann beispielsweise auftreten, weil Wärme lokal im verminderten Umfang zu einer Speise abtransportiert werden kann und daher ein Wärmestau auftritt.

Die elektrisch parallelgeschalteten Kaltleiter 5 bis 8 können sich innerhalb der Platte 2 befinden, also in die Platte 2 integriert sein. Die elektrisch parallelgeschalteten Kaltleiter 5 bis 8 können an der Unterseite der Platte 2 angebracht sein. Wird eine Speise zubereitet, so befindet sich diese dann oberhalb der Oberseite der Platte 2.

Das Material der Brücken 11 bis 17 kann vorteilhaft so ausgesucht sein, dass der Temperaturkoeffizient der elektrischen Brücken 11 bis 17 kleiner ist als der Temperaturkoeffizient der parallelgeschalteten elektrischen Kaltleiter 5 bis 8. Der Temperaturkoeffizient der elektrischen Brücken 11 bis 17 kann aber auch Null sein oder kleiner als Null sein.

Der elektrische Widerstand einer elektrischen jeden Brücke 11 bis 17 kann vorteilhaft kleiner als der elektrische Widerstand eines Abschnitts 19, 20, 21, 22 eines elektrischen Kaltleiters 5, 6, 7, 8 sein, der sich zwischen zwei benachbarten elektrischen Brücken 12, 13 befindet.

Im Fall der Figur 1 verlaufen die parallelgeschalteten elektrischen Kaltleiter 5 bis 8 kreisförmig sowie parallel zueinander, um die dafür vorgesehene Oberseite der Platte 2 möglichst gleichmäßig erhitzen zu können. Die parallelgeschalteten elektrischen Kaltleiter 5 bis 7 verlaufen also entlang einer Kreisbahn. Die Abstände zwischen den parallelgeschalteten elektrischen Kaltleitern 5 bis 8 sind im Fall der Figur 1 gleich groß.

Der Querschnitt der elektrischen Kaltleiter 5 bis 8 kann wie in der Figur 1 schematisch angedeutet von außen nach innen abnehmen, um so günstig verteilt Wärme erzeugen zu können. Der Querschnitt des außen liegenden Kaltleiters 5 ist also größer als der Querschnitt des daran angrenzenden Kaltleiters 6. Der Querschnitt des Kaltleiters 6 ist größer als der Querschnitt des anderen daran angrenzenden Kaltleiters 7. Der Querschnitt des Kaltleiters 7 ist größer als der Querschnitt des anderen daran angrenzenden Kaltleiters 8.

Die elektrischen Brücken 11 bis 17 weisen im Fall der Figur 1 untereinander gleiche Abstände auf. Die Abstände zwischen elektrischen Verbindungsleitern 9, 10 einerseits und den benachbarten Brücken 11, 17 andererseits sind gleich groß wie ein jeder Abstand zwischen zwei benachbarten Brücken 11 bis 17.

In der Figur 2 wird eine zweite, nicht erfindungsgemäße Ausführungsform gezeigt. Diese unterscheidet sich von der Ausführungsform der Figur 1 dadurch, dass zwar die Querschnitte der elektrischen Kaltleiter 5 bis 8 gleich groß sind, dafür aber die Kaltleiter 5 bis 8 gleich oder zumindest ähnlich lang sind. Dies wird durch unterschiedlich lange Schlaufen 23 bis 25 erreicht, also durch eine Abweichung vom ansonsten kreisförmigen Verlauf der Kaltleiter 5 bis 8. Der außen liegende Kaltleiter 5 weist keine Schlaufe auf. Der benachbarte Kaltleiter 6 weist eine vergleichsweise kurze Schlaufe 23 auf. Der nächste Kaltleiter 7 weist eine Schlaufe 24 mit mittlerer Länge auf. Der innenliegende Kaltleiter 8 weist eine Schlaufe 25 mit der größten Länge auf. Da die überwiegend kreisförmig verlaufenden Kaltleiter 5 bis 8 aufgrund der Schlaufen 23 bis 25 gleich lang oder zumindest ähnlich lang sind und auch ansonsten übereinstimmen, sind die elektrischen Widerstände der Kaltleiter 5 bis 8 gleich groß oder zumindest ähnlich. Pro Längeneinheit erzeugt damit ein jeder Kaltleiter die gleiche Wärmeleistung oder zumindest eine ähnliche Wärmeleistung bei gleicher Temperatur. Dies trägt dazu bei, eine gewünschte Fläche gleichmäßig beheizen zu können, um gute Kochergebnisse erzielen zu können.

Die Schlaufen 23 bis 25 müssen nicht in der gleichen Ebene wie die übrigen Abschnitte der Kaltleiter 5 bis 8 liegen. Diese können also beispielsweise von der Unterseite der Platte 2 abstehen, um nicht im Bereich der Schlaufen 23 bis 25 eine oberhalb davon befindliche Speise während einer Zubereitung lokal zu überhitzen.

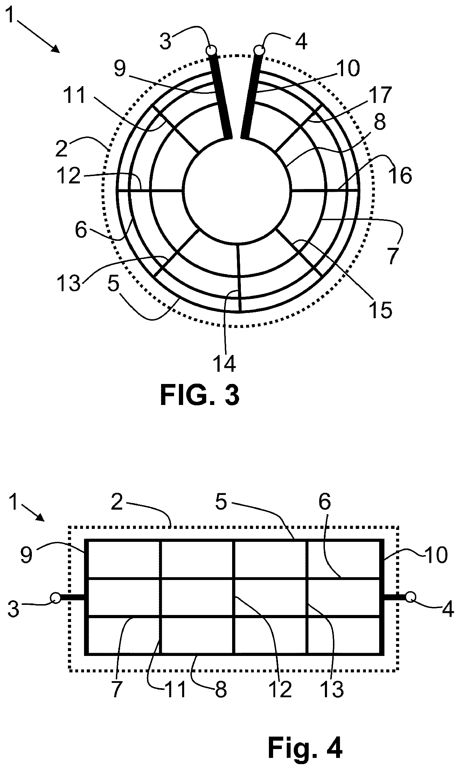

In der Figur 3 wird eine dritte, nicht erfindungsgemäße Ausführungsform gezeigt. Diese unterscheidet sich von der Ausführungsform der Figur 1 dadurch, dass die Querschnitte der ansonsten gleichen elektrischen Kaltleiter 5 bis 8 gleich groß sind. Der Abstand zwischen den Kaltleitern 5 bis 8 nimmt jedoch von außen nach innen zu. So ist der Abstand zwischen den beiden äußeren Kaltleitern 5 und 6 gering. Der Abstand zwischen den beiden inneren Kaltleitern 7 und 8 ist groß. Der Abstand zwischen den beiden Kaltleitern 6 und 7 weist im Vergleich zu den beiden anderen Abständen einen mittleren Wert auf. Zwar ist die Heizleistung eines Kaltleiters 5 bis 8 bezogen auf eine Längeneinheit umso geringer, je länger der jeweilige Kaltleiter 5 bis 8 ist. Dies liegt daran, weil der elektrische Widerstand mit zunehmender Länge eines Kaltleiters 5 bis 8 zunimmt. Da allerdings die Kaltleiter von innen nach außen gesehen untereinander einen kleiner werdenden Abstand aufweisen, kann die gewünschte Fläche dennoch zur Erzielung eines guten Kochergebnisses gleichmäßig erhitzt werden.

Es ist auch möglich, die in den Figuren 1 bis 3 offenbarten unterschiedlichen Maßnahmen miteinander zu kombinieren, um eine Fläche gleichmäßig beheizen zu können. Die Figuren 1 bis 3 zeigen den Fall, dass die Kaltleiter 5 bis 8 fast vollständig kreisförmig verlaufen. Diese können aber auch lediglich in etwa halbkreisförmig verlaufen und mit weiteren in etwa halbkreisförmig verlaufenden Kaltleitern nebst Brücken und elektrischen Anschlüssen zusammengesetzt sein, so dass eine kreisförmige Fläche gleichmäßig oder zumindest im Wesentlichen gleichmäßig erhitzt werden kann.

Die Figur 4 (nicht erfindungsgemäß) zeigt den Fall einer rechteckigen Platte 2, die durch Kaltleiter 5 bis 8 beheizt werden kann. Ein jeder Kaltleiter 5 bis 8 ist gleich beschaffen und verläuft geradlinig parallel zu einer Randseite der Platte 2. Untereinander weisen die Kaltleiter 5 bis 8 gleiche Abstände auf. Es sind drei Brücken 11, 12 und 13 vorhanden, die die Kaltleiter 5 bis 8 untereinander elektrisch verbinden. Die Brücken 11, 12 und 13 weisen untereinander gleiche Abstände auf. Die Abstände zwischen einem elektrischen Verbindungsleiter 9, 10 und der jeweils benachbarten Brücke 11 bzw. 13 sind ebenfalls wie in der Figur 4 gezeigt entsprechend gleich.

Eine solche Platte 2 kann beispielsweise eine Seitenwand eines Backofens sein, über die der Innenraum des Backofens beheizt werden kann.

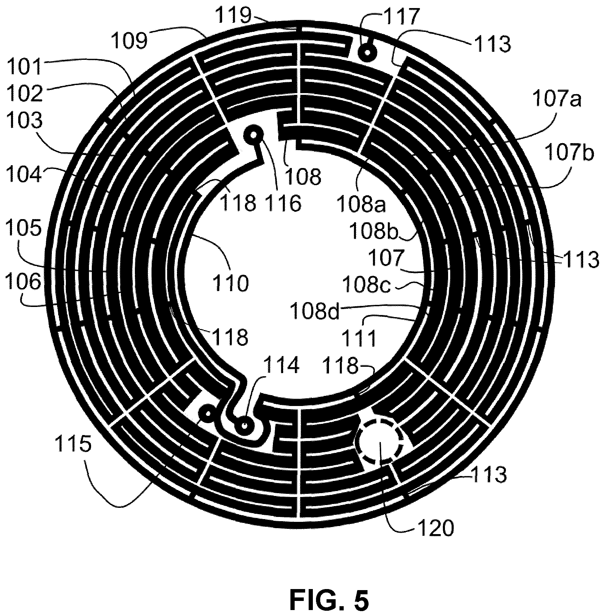

Die Figur 5 zeigt eine erfindungsgemäße elektrische Heizeinrichtung für ein Speisenzubereitungsgerät mit einer großen Vielzahl von elektrischen Kaltleitern 101 bis 108, die für ein Erhitzen einer Speise vorgesehen sind. Es gibt eine sehr große Vielzahl von elektrisch parallelgeschalteten Kaltleitern, die für ein Erhitzen eingerichtet und folglich für ein Erhitzen vorgesehen sind. Fließt beispielsweise ein elektrischer Strom durch eine Brücke 118 zu einem elektrischen Kaltleiter 108, so teilt sich der Strom in zwei Teilströme auf. Ein Teilstrom fließt durch den Abschnitt 108a und ein Teilstrom fließt durch den Abschnitt 108b des elektrischen Kaltleiters 108. Über Brücken 113 fließen dann die Teilströme zu den Abschnitten 107a und 107b eines benachbart angeordneten elektrischen Kaltleiters 107. Erfindungsgemäß werden die vier Abschnitte 107a, 107b, 108a, 108b als drei parallelgeschaltete Kaltleiter, die für ein Erhitzen vorgesehen sind, gezählt. Die beiden Kaltleiterabschnitte 108a, 107a werden als ein parallelgeschalteter Kaltleiter gezählt, weil der Teilstrom, der durch den Kaltleiterabschnitt 108a fließt, immer zwingend mit dem Teilstrom übereinstimmt, der durch den Kaltleiterabschnitt 107a fließt. Die zwei Kaltleiterabschnitte 107b und 108b werden dagegen als zwei parallelgeschaltete Kaltleiter gezählt, weil der Teilstrom, der durch den Kaltleiterabschnitt 107b fließt, nicht zwingend mit dem Teilstrom übereinstimmt, der durch den Kaltleiterabschnitt 108b fließt. Ein Kaltleiterabschnitt ist ein Abschnitt eines Kaltleiters zwischen zwei Brücken 113, 118, 119. Ein für ein Erhitzen vorgesehener Kaltleiter 108 kann bei der Ausführungsform der Figur 5 daher bis zu vier Kaltleiterabschnitte 108a bis 108d umfassen. Durch einen jeden der Kaltleiterabschnitte 108a bis 108d kann ein anderer Teilstrom fließen.

Die in der Figur 5 gezeigte Heizeinrichtung umfasst mehr als fünfzig elektrisch parallelgeschaltete Kaltleiter für ein Erhitzen einer Speise. Der kuchenstückartige Bereich mit den Kaltleiterabschnitten 108a bis 108d und den Abschnitten 107a und 107b umfasst 24 elektrisch parallelgeschaltete Kaltleiter. Diesem kuchenstückartigen Bereich liegt ein gleich großer kuchenstückartiger Bereich in der linken Bildhälfte auf gleicher Höhe gegenüber. Dieser umfasst ebenfalls 24 elektrisch parallelgeschaltete Kaltleiter. Es gibt noch drei kleinere kuchenstückartige Bereiche mit jeweils zwei elektrisch parallelgeschalteten Kaltleitern, die zusammen mit Brücken 113 mäanderförmig verlaufen. Insgesamt gibt es daher 54 elektrisch parallel geschaltete Kaltleiter, die für ein Erhitzen eingerichtet und vorgesehen sind.

Zwei der vorgenannten drei kleineren kuchenstückartige Bereiche sind auch in der Figur 8 zu sehen. Diese sind also in der Figur 5 unten zu sehen. Der dritte kleinere kuchenstückartige Bereich liegt gegenüber und ist in der Figur 5 oben zu sehen. Eine in der Figur 8 gezeigte kuchenstückartige Unterteilung zwischen zwei gestrichelten Linien A ist halb so groß, wie ein hier gemeinter "kleinerer kuchenstückartiger Bereich".

Zwei für ein Erhitzen einer Speise vorgesehene elektrische Kaltleiter 101 bis 108 sind durch elektrische Brücken 113 miteinander elektrisch verbunden. Diese elektrischen Brücken 113 weisen untereinander gleiche Abstände auf. Eine jede elektrische Brücke 113 verbindet nicht mehr als zwei elektrische Kaltleiter 101 bis 108 miteinander. Eine jede elektrische Brücke 113 verbindet folglich genau zwei elektrische Kaltleiter 101 bis 108, die für ein Erhitzen einer Speise vorgesehen sind.

Die für ein Erhitzen einer Speise vorgesehenen elektrischen Kaltleiter bestehen beispielsweise aus einer Legierung, die Silber umfasst, um den herrschenden Umwelteinflüssen gut gewachsen zu sein. Die Legierung kann Silber und Palladium umfassen oder aus Silber und Palladium bestehen. Besonders bevorzugt ist eine aus Silber und Ruthenium bestehende Legierung oder eine Legierung, die Silber und Ruthenium umfasst.

Die für ein Erhitzen einer Speise vorgesehenen elektrischen Kaltleiter 101 bis 108 verlaufen entlang von Kreisbahnen. Die für ein Erhitzen einer Speise vorgesehenen elektrischen Kaltleiter 101 verlaufen entlang einer äußeren Kreisbahn. Die für ein Erhitzen einer Speise vorgesehenen elektrischen Kaltleiter 108 verlaufen entlang einer inneren Kreisbahn. Dazwischen verlaufen die weiteren für ein Erhitzen einer Speise vorgesehenen elektrischen Kaltleiter 102 bis 107 entlang von Kreisbahnen. Auf einer jeden Kreisbahn kann es eine Mehrzahl von elektrischen Kaltleitern 101 bis 108 geben, die wie in der Figur 5 gezeigt räumlich voneinander getrennt sind.

Ein Grund für die räumliche Trennung kann sein, dass zwei von innen nach außen verlaufende elektrisch parallelgeschaltete, für ein Erhitzen vorgesehene Kaltleiter, die zusammen mit Brücken 113 mäanderförmig von innen nach außen verlaufen, von Vorteil sind, um Temperaturen geeignet erfassen zu können. So gibt es zwei solcher im Zusammenspiel mit Brücken mäanderförmig von innen nach außen verlaufenden, elektrisch parallelgeschalteten Kaltleiter im Zwischenraum zwischen den beiden elektrischen Kontakten 116 und 117. Die elektrischen Kontakte 116 und 117 sind durch einen in der Figur 5 nicht dargestellten Bimetallschalter miteinander elektrisch verbunden. Der Bimetallschalter befindet sich oberhalb der beiden im Zusammenspiel mit Brücken 113 mäanderförmig von innen nach außen verlaufenden, elektrisch parallelgeschalteten Kaltleiter. Beide im Zusammenspiel mit Brücken 113 mäanderförmig von innen nach außen verlaufenden, elektrisch parallelgeschalteten Kaltleiter können daher unabhängig voneinander den Bimetallschalter so erhitzen, dass dieser bei Überschreiten eines Temperaturschwellwertes eine Stromzufuhr unterbricht.

Wie in der Figur 5 gezeigt, nimmt die Breite und damit der Querschnitt der für ein Erhitzen einer Speise vorgesehenen elektrischen Kaltleiter 101 bis 108 mit kleiner werdendem Radius der jeweiligen Kreisbahn zu.

Die für ein Erhitzen vorgesehenen elektrischen Kaltleiter 101 bis 108 werden von einem elektrischen Leiter 109 außen umlaufen. Die Bahn des elektrischen Leiters 109 ist geschlossen. Es ist allerdings nicht notwendig, dass die Bahn des elektrischen Leiters 109 geschlossen ist. Brücken 119 verbinden den außen umlaufenden elektrischen Leiter 109 mit den für ein Erhitzen vorgesehenen elektrischen Kaltleitern 101. Brücken 119 weisen untereinander gleiche Abstände auf. Im Fall der Figur 5 weisen sämtliche Brücken 119 untereinander gleiche Abstände auf. Über den elektrischen Leiter 109 werden die für ein Erhitzen einer Speise vorgesehenen elektrischen Kaltleiter 101 bis 108 mit Strom versorgt.

Die für ein Erhitzen vorgesehenen elektrischen Kaltleiter 101 bis 108 werden von einem elektrischen Leiter 111 innen umlaufen. Brücken 118 verbinden den innen umlaufenden elektrischen Leiter 111 mit den für ein Erhitzen vorgesehenen elektrischen Kaltleitern 108 elektrisch.

Die elektrischen Brücken 113, 118, 119 sowie die der Stromzufuhr dienenden elektrischen Leiter 109, 110 und 111 bestehen aus einem sehr gut elektrisch leitenden Material wie Silber, Kupfer oder Gold. Für das Anschließen einer Stromquelle sind die beiden elektrischen Kontakte 114 und 115 vorhanden. Die beiden elektrischen Kontakte 114 und 115 sind benachbart angeordnet, um unproblematisch eine Stromquelle anschließen zu können. Vom elektrischen Kontakt 114 aus kann Strom entlang des elektrischen Leiters 110 fließen und zwar bis zum elektrischen Kontakt 116. Vom elektrischen Kontakt 116 gelangt der Strom durch den genannten Bimetallschalter hindurch zum elektrischen Kontakt 117 und von hier aus zum außen umlaufenden elektrischen Leiter 109.

Auch der elektrische Leiter 110 verläuft entlang einer Kreisbahn, damit in der Mitte ein kreisförmiger Raum verbleibt, der frei von elektrischen Leitern ist. Der Freiraum wird also von den elektrischen Leitern 110 und 111 kreisförmig umrundet. Dieser Freiraum kann dazu genutzt werden, um beispielsweise eine Welle für ein Rührwerkzeug des Speisenzubereitungsgeräts hindurchführen zu können.

Die Brücken 118 weisen untereinander zumindest dann gleiche Abstände auf, wenn diese den innen umlaufenden elektrischen Leiter 111 mit ein und demselben elektrischen Kaltleiter 108 verbinden. Darüber hinaus kann von dieser Regel abgewichen werden, um geometrischen Besonderheiten Rechnung tragen zu können, die aufgrund der elektrischen Anschlüsse 114, 115, aufgrund des Bimetallschalters zwischen den beiden elektrischen Anschlüssen 116, 117 oder eines Temperatursensors 120 auftreten können.

Der Temperatursensor 120 ist so angeordnet, dass dieser die Temperatur von zwei verschiedenen elektrisch parallelgeschalteten, für ein Erhitzen vorgesehenen Kaltleitern messen kann. Die beiden elektrisch parallelgeschalteten Kaltleiter verlaufen zusammen mit Brücken 113 mäanderförmig von dem innen umlaufenden elektrischen Leiter 111 zu dem außen umlaufenden elektrischen Leiter 109.

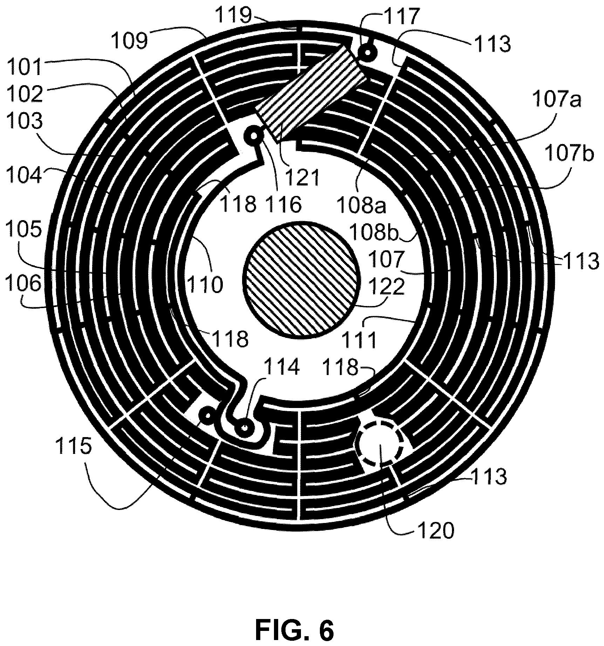

Die Figur 6 verdeutlicht die Anordnung eines Bimetallschalters 121, der den elektrischen Kontakt 116 mit dem elektrischen Kontakt 117 verbindet. Dieser Bimetallschalter 121 befindet sich oberhalb eines kuchstückartigen Bereichs mit zwei elektrisch parallelgeschalteten Kaltleitern, die für ein Erhitzen vorgesehen sind und die zusammen mit Brücken 113 mäanderförmig verlaufen.

In der Figur 6 wird außerdem ein Schnitt durch eine Welle 122 gezeigt, die für ein Antreiben eines Rührwerkzeugs durch die elektrischen Leiter hindurchgeführt ist und zwar durch den dafür vorgesehenen Freiraum hindurch.

Die Figur 7 zeigt zwei für ein Erhitzen vorgesehene Kaltleiter 101 und 102, die den für ein Erhitzen vorgesehenen Kaltleitern 101 und 102 aus der Figur 6 entsprechen. Die beiden für ein Erhitzen vorgesehenen Kaltleiter 101 und 102 sind durch eine Brücke 113 elektrisch leitend miteinander verbunden. Das Material, aus dem die Brücke 7 besteht, überlappt mit dem Material, aus dem die beiden für ein Erhitzen vorgesehenen Kaltleiter 101 und 102 bestehen. Im Überlappungsbereich befindet sich also die Brücke 113 auf dem jeweiligen Kaltleiter 101, 102. Dadurch ist ein besonders zuverlässiger und dauerhafter elektrischer Kontakt zwischen Brücke 113 und Kaltleiter 101 bzw. Kaltleiter 102 sichergestellt.

Die Figur 8 zeigt einen Ausschnitt aus Figur 5 mit hinzugefügten gestrichelten Linien A. Die Linien A unterteilen die Heizfläche kuchenstückartig. Diese kuchenstückartige Unterteilung ist aber anders als die in der Figur 5 genannte Unterteilung in kuchenstückartige Bereiche. Die Linien A verlaufen zwischen parallelgeschalteten Kaltleitern 101 bis 108, die für ein Erhitzen vorgesehen sind. Der elektrische Gesamtwiderstand der für ein Erhitzen vorgesehenen Kaltleiter 101 bis 108 zwischen zwei gestrichelten Linien A ist immer gleich groß oder zumindest im Wesentlichen gleich groß. Mit Gesamtwiderstand ist gemeint, dass die elektrischen Widerstände der für ein Erhitzen vorgesehenen Kaltleiter 101 bis 108 innerhalb einer kuchstückartigen Unterteilung aufaddiert werden. Es wird so erreicht, dass innerhalb einer kuchenstückartigen Unterteilung zwischen zwei gestrichelten Linien A im Wesentlichen die gleiche Wärme erzeugt werden kann. Ein hinreichend gleichmäßiges Erhitzen der zu beheizenden Fläche wird so erreicht. Da die elektrischen Widerstände der Brücken 113 sehr viel kleiner sind im Vergleich zu den elektrischen Widerständen der für ein Erhitzen vorgesehenen Kaltleiter 101 bis 108, muss im Fall der Brücken 113 nicht unbedingt auf möglichst gleiche elektrische Widerstände geachtet werden, um möglichst gleichmäßig erhitzen zu können. Es ist aber von Vorteil, dies dennoch zu tun.

Die elektrischen Widerstände von zwei zueinander parallel geschalteten Kaltleitern, die für ein Erhitzen vorgesehen sind, sind daher grundsätzlich gleich groß. Im Fall der Figur 5 weist daher der Abschnitt 108a den gleichen elektrischen Widerstand auf wie der Abschnitt 108b. Der Abschnitt 107a weist den gleichen elektrischen Widerstand auf wie der Abschnitt 107b. Der elektrische Widerstand der Abschnitte 107a und 107b ist allerdings größer als der elektrische Widerstand der Abschnitte 108a und 108b, weil die Abschnitte 108a und 108b eine kleinere zu beheizende Fläche abdecken sollen als die Abschnitte 107a und 107b.

## Patentansprüche

1. Speisenzubereitungsgerät (1) mit einer elektrischen Heizeinrichtung, die zumindest zwei elektrische Kaltleiter (5, bis 8; 101 bis 108) für ein Erhitzen einer Speise in einem Speisenzubereitungsraum umfasst, wobei die elektrischen Kaltleiter (5, bis 8; 101 bis 108) elektrisch parallelgeschaltet sind,
wobei zwei für ein Erhitzen einer Speise vorgesehene elektrische Kaltleiter (5, bis 8; 101 bis 108) durch ein oder mehrere elektrische Brücken (11 bis 17; 113) miteinander elektrisch verbunden sind,
**dadurch gekennzeichnet, dass** eine jede der ein oder mehreren elektrischen Brücken (113) nicht mehr als zwei elektrische Kaltleiter (101 bis 108) miteinander elektrisch verbindet.

2. Speisenzubereitungsgerät (1) nach dem vorhergehenden Anspruch, **dadurch gekennzeichnet, dass** die für ein Erhitzen einer Speise vorgesehenen elektrischen Kaltleiter (5, bis 8; 101 bis 108) aus einer Heizleiterlegierung mit einem elektrischen spezifischen Widerstand von wenigstens 0,3 Ω·mm²/m, vorzugsweise von wenigstens 1 Ω·mm²/m, bestehen.

3. Speisenzubereitungsgerät (1) nach einem der vorhergehenden Ansprüche, **dadurch gekennzeichnet, dass** die für ein Erhitzen einer Speise vorgesehenen elektrischen Kaltleiter (101 bis 108) entlang von Kreisbahnen verlaufen.

4. Speisenzubereitungsgerät (1) nach dem vorhergehenden Anspruch, **dadurch gekennzeichnet, dass** der Querschnitt der für ein Erhitzen einer Speise vorgesehenen elektrischen Kaltleiter (101 bis 108) mit kleiner werdendem Radius einer Kreisbahn zunimmt.

5. Speisenzubereitungsgerät (1) nach einem der vorhergehenden Ansprüche, **dadurch gekennzeichnet, dass** die für ein Erhitzen vorgesehenen elektrischen Kaltleiter (101 bis 108) von einem elektrischen Leiter (109) außen umlaufen werden, der aus einem Material mit einem elektrischen spezifischen Widerstand besteht, der wenigstens 10 mal, bevorzugt wenigstens 100 mal, kleiner ist als der elektrische spezifische Widerstand des Materials, aus dem die für ein Erhitzen vorgesehenen elektrischen Kaltleiter (101 bis 108) bestehen und Brücken (119) vorgesehen sind, die den außen umlaufenden elektrischen Leiter (109) mit für ein Erhitzen vorgesehenen elektrischen Kaltleitern (101) elektrisch verbinden und/oder dass
die für ein Erhitzen vorgesehenen elektrischen Kaltleiter (101 bis 108) von einem elektrischen Leiter (111) innen umlaufen werden, der aus einem Material mit einem elektrischen spezifischen Widerstand besteht, der wenigstens 10 mal, bevorzugt wenigstens 100 mal, kleiner ist als der elektrische spezifische Widerstand des Materials, aus dem die für ein Erhitzen vorgesehenen elektrischen Kaltleiter (101 bis 108) bestehen und Brücken (118) vorgesehen sind, die den innen umlaufenden elektrischen Leiter (111) mit für ein Erhitzen vorgesehenen elektrischen Kaltleitern (108) elektrisch verbinden.

6. Speisenzubereitungsgerät (1) nach einem der vorhergehenden abhängigen Ansprüche, **dadurch gekennzeichnet, dass** die elektrischen Brücken (11 bis 17; 113) aus einem Material mit einem elektrischen spezifischen Widerstand bestehen, der wenigstens 10mal, bevorzugt wenigstens 100mal, kleiner ist als der elektrische spezifische Widerstand, aus dem die für ein Erhitzen einer Speise vorgesehenen Kaltleiter (5, bis 8; 101 bis 108) bestehen.

7. Speisenzubereitungsgerät (1) nach einem der vorhergehenden abhängigen Ansprüche, **dadurch gekennzeichnet, dass** die Brücken und/oder die nicht für ein Erhitzen vorgesehenen elektrischen Leiter (109, 110, 111) aus Silber bestehen.

8. Speisenzubereitungsgerät nach einem der vorhergehenden abhängigen Ansprüche, **dadurch gekennzeichnet, dass** Brücken (113, 118, 119), die mit einem elektrischen Kaltleiter (101 bis 108) verbunden sind, untereinander gleiche Abstände aufweisen.

9. Speisenzubereitungsgerät nach einem der vorhergehenden Ansprüche, **dadurch gekennzeichnet, dass** das Speisenzubereitungsgefäß wenigstens vierzig, bevorzugt wenigstens fünfzig, elektrisch parallelgeschaltete Kaltleiter (101 bis 108) für ein Erhitzen einer Speise umfasst.

10. Speisenzubereitungsgerät nach einem der vorhergehenden Ansprüche, **dadurch gekennzeichnet, dass** ein temperaturabhängiger Schalter, insbesondere ein Bimetallschalter (121), vorhanden ist, der bei Überschreiten eines Temperatur - Schwellwertes eine Stromzufuhr zu den für ein Erhitzen vorgesehenen Kaltleitern unterbricht, wobei
der temperaturabhängige Schalter (121) so angeordnet ist, dass dieser durch die Temperatur von zwei verschiedenen elektrisch parallelgeschalteten, für ein Erhitzen vorgesehenen Kaltleitern (101 bis 108) geschaltet werden kann.

11. Speisenzubereitungsgerät nach einem der vorhergehenden Ansprüche, **dadurch gekennzeichnet, dass** ein Temperatursensor (120) des Speisenzubereitungsgerätes so angeordnet ist, dass der Temperatursensor (120) von zwei verschiedenen elektrisch parallelgeschalteten, für ein Erhitzen vorgesehenen Kaltleitern (101 bis 108) erhitzt werden kann.

12. Speisenzubereitungsgerät nach einem der vorhergehenden Ansprüche, **dadurch gekennzeichnet, dass** für ein Erhitzen vorgesehene Kaltleiter (101 bis 108) zusammen mit Brücken (113) mäanderförmig verlaufen.

13. Speisenzubereitungsgerät nach dem vorhergehenden Anspruch, **dadurch gekennzeichnet, dass** zwei für ein Erhitzen vorgesehene Kaltleiter (101 bis 108) zusammen mit Brücken (113) mäanderförmig verlaufen, die elektrisch parallelgeschaltet sind.

## Claims

1. Food preparation apparatus (1) with an electrical heating device comprising at least two electrical PTC thermistors (5 to 8; 101 to 108) for heating a food in a food preparation space, wherein the electrical PTC thermistors (5 to 8; 101 to 108) are electrically connected in parallel, wherein two electrical PTC thermistors (5 to 8; 101 to 108) provided for heating a food are electrically connected to each other by one or more electrical bridges (11 to 17; 113), **characterized in that** each of the one or more electrical bridges (113) electrically connects not more than two electrical PTC thermistors (101 to 108) to each other.

2. Food preparation apparatus (1) according to the preceding claim, **characterized in that** the electrical PTC thermistors (5 to 8; 101 to 108) provided for heating a food consist of a heating-conductor alloy having an electrical resistivity of at least 0.3 Ω·mm²/m, preferably of at least 1 Ω·mm²/m.

3. Food preparation apparatus (1) according to one of the preceding claims, **characterized in that** the electrical PTC thermistors (101 to 108) provided for heating a food run along circular paths.

4. Food preparation apparatus (1) according to the preceding claim, **characterized in that** the cross-section of the electrical PTC thermistors (101 to 108) provided for heating a food increases with decreasing radius of a circular path.

5. Food preparation apparatus (1) according to one of the preceding claims, **characterized in that** the electrical PTC thermistors (101 to 108) provided for heating are externally circulated by an electrical conductor (109) which consists of a material having an electrical resistivity which is at least 10 times, preferably at least 100 times, lower than the electrical resistivity of the material of which the electrical PTC thermistors (101 to 108) provided for heating consist, and bridges (119) are provided which electrically connect the externally circulating electrical conductor (109) to the electrical PTC thermistors (101) provided for heating and/or **in that**
the electrical PTC thermistors (101 to 108) provided for heating are internally circulated by an electrical conductor (111) which consists of a material having an electrical resistivity which is at least 10 times, preferably at least 100 times, lower than the electrical resistivity of the material of which the electrical PTC thermistors (101 to 108) provided for heating consist, and bridges (118) are provided which electrically connect the internally circulating electrical conductor (111) to electrical PTC thermistors (108) provided for heating.

6. Food preparation apparatus (1) according to one of the preceding dependent claims, **characterized in that** the electrical bridges (11 to 17; 113) consist of a material having an electrical resistivity which is at least 10 times, preferably at least 100 times, lower than the electrical resistivity of which the PTC thermistors (5 to 8; 101 to 108) provided for heating a food consist.

7. Food preparation apparatus (1) according to one of the preceding dependent claims, **characterized in that** the bridges and/or the electrical conductors (109, 110, 111) not intended for heating consist of silver.

8. Food preparation apparatus according to one of the preceding dependent claims, **characterized in that** bridges (113, 118, 119) connected to an electrical PTC thermistor (101 to 108) have equal distances between them.

9. Food preparation apparatus according to one of the preceding claims, **characterized in that** the food preparation vessel comprises at least forty, preferably at least fifty, PTC thermistors (101 to 108) electrically connected in parallel for heating a food.

10. Food preparation apparatus according to one of the preceding claims, **characterized in that** a temperature-dependent switch, in particular a bimetal switch (121), is provided which interrupts a current supply to the PTC thermistors provided for heating when a temperature threshold value is exceeded, wherein
the temperature-dependent switch (121) is arranged such that it can be switched by the temperature of two different PTC thermistors (101 to 108) connected electrically in parallel which are provided for heating.

11. Food preparation apparatus according to one of the preceding claims, **characterized in that** a temperature sensor (120) of the food preparation apparatus is arranged such that the temperature sensor (120) may be heated by two different PTC thermistors (101 to 108) connected electrically in parallel which are provided for heating.

12. Food preparation apparatus according to one of the preceding claims, **characterized in that** PTC thermistors (101 to 108) provided for heating together with bridges (113) run in a meandering manner.

13. Food preparation apparatus according to the preceding claim, **characterized in that** two PTC thermistors (101 to 108) provided for heating run in a meandering manner together with bridges (113) which are electrically connected in parallel.

## Revendications

1. Appareil de préparation d'aliments (1) avec un dispositif de chauffage électrique, qui comprend au moins deux conducteurs électriques à froid (5 à 8 ; 101 à 108) pour un chauffage d'un aliment dans un espace de préparation d'aliments, dans lequel les conducteurs électriques à froid (5 à 8 ; 101 à 108) sont montés électriquement en parallèle,
dans lequel deux conducteurs électriques à froid (5 à 8 ; 101 à 108) prévus pour un chauffage d'un aliment sont reliés électriquement entre eux par un ou plusieurs ponts électriques (11 à 17 ; 113),
**caractérisé en ce que** chacun des un ou plusieurs ponts électriques (113) ne relie pas électriquement plus de deux conducteurs électriques à froid (101 à 108).

2. Appareil de préparation d'aliments (1) selon la revendication précédente, **caractérisé en ce que** les conducteurs électriques à froid (5 à 8 ; 101 à 108) prévus pour un chauffage d'un aliment sont constitués d'un alliage de conducteurs chauffants ayant une résistivité électrique d'au moins 0,3 Ω·mm²/m, de préférence d'au moins 1 Ω·mm²/m.

3. Appareil de préparation d'aliments (1) selon l'une des revendications précédentes, **caractérisé en ce que** les conducteurs électriques à froid (101 à 108) prévus pour un chauffage d'un aliment s'étendent le long de trajectoires circulaires.

4. Appareil de préparation d'aliments (1) selon la revendication précédente, **caractérisé en ce que** la section transversale des conducteurs électriques à froid (101 à 108) prévus pour un chauffage d'un aliment augmente lorsque le rayon d'une trajectoire circulaire diminue.

5. Appareil de préparation d'aliments (1) selon l'une des revendications précédentes, **caractérisé en ce que** les conducteurs électriques à froid (101 à 108) prévus pour un chauffage sont circulés extérieurement par un conducteur électrique (109) qui est constitué d'un matériau ayant une résistivité électrique qui est au moins 10 fois, de préférence au moins 100 fois, plus petite que la résistivité électrique du matériau dont sont constitués les conducteurs électriques à froid (101 à 108) prévus pour un chauffage, et des ponts (119) sont prévus, qui relient électriquement le conducteur électrique (109) circulant à l'extérieur aux conducteurs électriques à froid (101) prévus pour un chauffage et/ou que
les conducteurs électriques à froid (101 à 108) prévus pour un chauffage sont circulés intérieurement par un conducteur électrique (111) qui est constitué d'un matériau ayant une résistivité électrique qui est au moins 10 fois, de préférence au moins 100 fois, plus petite que la résistivité électrique du matériau dont sont constitués les conducteurs électriques à froid (101 à 108) prévus pour un chauffage, et des ponts (118) sont prévus qui relient électriquement le conducteur électrique (111) circulant intérieurement à des conducteurs électriques à froid (108) prévus pour un chauffage.

6. Appareil de préparation d'aliments (1) selon l'une des revendications dépendantes précédentes, **caractérisé en ce que** les ponts électriques (11 à 17 ; 113) sont constitués d'un matériau ayant une résistivité électrique qui est au moins 10 fois, de préférence au moins 100 fois, plus petite que la résistivité électrique dont sont constitués les conducteurs à froid (5 à 8 ; 101 à 108) prévus pour un chauffage d'un aliment.

7. Appareil de préparation d'aliments (1) selon l'une des revendications dépendantes précédentes, **caractérisé en ce que** les ponts et/ou les conducteurs électriques (109, 110, 111) non prévus pour un chauffage sont constitués d'argent.

8. Appareil de préparation d'aliments selon l'une des revendications dépendantes précédentes, **caractérisé en ce que** des ponts (113, 118, 119) qui sont reliés à un conducteur électrique à froid (101 à 108) présentent des distances égales entre eux.

9. Appareil de préparation d'aliments selon l'une des revendications précédentes, **caractérisé en ce que** le récipient de préparation d'aliments comprend au moins quarante, de préférence au moins cinquante, conducteurs électriques à froid (101 à 108) montés électriquement en parallèle pour un chauffage d'un aliment.

10. Appareil de préparation d'aliments selon l'une des revendications précédentes, **caractérisé en ce qu'**il est prévu un commutateur dépendant de la température, en particulier un commutateur bimétallique (121), qui, en cas de dépassement d'une valeur seuil de température, interrompt une alimentation en courant vers les conducteurs électriques à froid prévus pour un chauffage, dans lequel
le commutateur dépendant de la température (121) est disposé de telle sorte qu'il peut être commuté par la température de deux conducteurs électriques à froid (101 à 108) différents, montés électriquement en parallèle et prévus pour un chauffage.

11. Appareil de préparation d'aliments selon l'une des revendications précédentes, **caractérisé en ce qu'**un capteur de température (120) de l'appareil de préparation d'aliments est disposé de telle sorte que le capteur de température (120) peut être chauffé par deux conducteurs électriques à froid (101 à 108) différents montés électriquement en parallèle et prévus pour un chauffage.

12. Appareil de préparation d'aliments selon l'une des revendications précédentes, **caractérisé en ce que** les conducteurs électriques à froid (101 à 108) prévus pour un chauffage s'étendent, ensemble avec des ponts (113), en forme de méandres.

13. Appareil de préparation d'aliments selon la revendication précédente, **caractérisé en ce que** deux conducteurs électriques à froid (101 à 108) prévus pour un chauffage s'étendent, ensemble avec des ponts (113), en forme de méandres qui sont montés électriquement en parallèle.
